# EUROPEAN PATENT APPLICATION

(11) **EP 4 726 886 A1**
(43) Date of publication of application: **15.04.2026**
(21) Application number: 25752309.2
(22) Date of filing: 23.01.2025
(51) Int. Cl.: H01M 50/242, H01M 10/6551, H01M 50/60, H01M 50/105, H01M 50/211, H01M 10/613, H01M 50/249

(54) **BATTERY MODULE, AND BATTERY PACK AND VEHICLE INCLUDING SAME**

(30) Priority: 07.02.2024 KR 20240019193
(71) Applicant: LG Energy Solution, Ltd., Seoul 07335 (KR)
(72) Inventor: SEON, Sang-Ok, Daejeon 34122 (KR); KIM, Jee-Won, Daejeon 34122 (KR); SHIN, Jae-Wook, Daejeon 34122 (KR); HWANG, Jae-Cheol, Daejeon 34122 (KR)
(74) Representative: Plasseraud IP
(86) International application number: PCT/KR2025/001338
(87) International publication number: WO 2025/170261

(57) **Abstract**

The present disclosure relates to a battery module including: a cell assembly including a plurality of battery cells; a module case configured to store the cell assembly; a thermally conductive adhesive interposed between the cell assembly and the module case and configured to fix the cell assembly; and an overflow prevention member provided between the cell assembly and the module case and configured to form a space in which the thermally conductive adhesive is to be received.

## Description

### TECHNICAL FIELD

The present disclosure relates to a battery module, and a battery pack and vehicle including the same.

This application is based on and claims priority from Korean Patent Application No. 10-2024-0019193, filed on February 07, 2024, with the Korean Intellectual Property Office, the disclosure of which is incorporated herein in its entirety by reference.

### BACKGROUND ART

Secondary battery cells, which are easy to apply depending on the product group and have electrical features such as high energy density and the like, are generally used in electric vehicles (EVs) or hybrid electric vehicles (HEVs) that are driven by an electrical drive source, as well as in portable devices. These secondary battery cells are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a high output voltage is required, a battery module or battery pack may be configured by connecting a plurality of battery cells in series. In addition, a battery module or battery pack may be configured by connecting multiple battery cells in parallel in order to increase the charge/discharge capacity.

A common method for configuring a battery pack by connecting a plurality of battery cells in series/parallel is to preferentially configure a battery module including at least one battery cell and then add other elements to one or more battery modules, thereby configuring a battery pack or battery rack. Alternatively, a battery pack has recently been manufactured in a cell-to-pack type in which multiple battery cells are directly stored in a pack housing, instead of being modularized.

Meanwhile, in the case of conventional battery modules, a thermally conductive adhesive may be applied to one side of a cell assembly in which the battery cells are stacked in order to cool the battery cells or fix the cell assembly. Such conventional battery modules may have various problems when swelling occurs in the battery cells during the charge/discharge cycle.

For example, when swelling occurs in the battery cells, all battery cells of the cell assembly tend to move toward the outermost side, while one side of the cell assembly that is in direct contact with the thermally conductive adhesive is fixed by the hardened thermally conductive adhesive. This may cause a problem in which a part of the cell case with a lower elongation is damaged.

In particular, if the thermally conductive adhesive overflows to the side of the cell assembly, the battery cell may be damaged by the hardened thermally conductive adhesive when swelling occurs in the battery cell. In addition, during this process, the battery cell may be detached from the thermally conductive adhesive, which may degrade the heat dissipation performance of the battery cell.

Therefore, there is a need to develop a structure capable of preventing damage to the battery cell by suppressing the overflow of the thermally conductive adhesive.

### DISCLOSURE

### Technical Problem

The present disclosure is designed to solve the problems of the related art, and therefore the present disclosure is directed to providing a battery module with an improved structure capable of minimizing damage to the battery cell even when a swelling phenomenon occurs, and a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a cell assembly including a plurality of battery cells; a module case configured to store the cell assembly; a thermally conductive adhesive interposed between the cell assembly and the module case and configured to fix the cell assembly; and an overflow prevention member provided between the cell assembly and the module case and configured to form a space in which the thermally conductive adhesive is to be received.

The overflow prevention member may be configured to receive the thermally conductive adhesive inside the receiving space and suppress the thermally conductive adhesive from flowing.

The battery cells may be provided as pouch-type battery cells configured to be stacked with surfaces in contact with each other while a side not having an electrode lead extending therefrom faces downward, and the overflow prevention member may be configured to prevent the thermally conductive adhesive from overflowing to a part, other than the side of the battery cell, along an interface extending from the side of the battery cell.

The thermally conductive adhesive may be provided only at a bottom of the cell assembly to fix a lower part of the cell assembly.

A plurality of receiving spaces may be provided to be disposed on the module case along a horizontal direction.

The overflow prevention member may include a mesh pad configured in a mesh shape.

The battery module may further include a stopper provided on both sides of the overflow prevention member.

The overflow prevention member may include a plurality of overflow prevention pads configured such that the receiving space is formed in spaces formed to be spaced apart from each other.

The overflow prevention pad may be configured as a thermally conductive pad.

The overflow prevention pad may be made of a material having adhesiveness.

The overflow prevention pad may include first pads configured to be spaced apart from each other along a first direction.

The first pad is configured to face longitudinal both ends of the cell assembly.

The overflow prevention pad may include second pads provided between the first pads and configured to be spaced apart from each other along a second direction orthogonal to the first direction.

The overflow prevention pad may be configured by at least partially perforating the same, and the receiving space may be defined by the perforated portion of the overflow prevention pad.

The overflow prevention pad may include a guide portion configured to be inclined toward the receiving space.

In another aspect of the present disclosure, there is provided a battery pack including a battery module according to the present disclosure.

In another aspect of the present disclosure, there is provided a vehicle including a battery module according to the present disclosure.

### Advantageous Effects

According to an embodiment of the present disclosure, it is possible to secure stability against swelling of a battery device including battery cells, i.e., a battery module or a battery pack.

In particular, according to an embodiment of the present disclosure, the cell stacking state can be stably maintained in a normal state in a battery module or a battery pack including a plurality of battery cells stacked. In addition, it is possible to prevent damage to components of a battery module, such as battery cells, in a swelling situation.

In addition, according to an embodiment of the present disclosure, it is possible to prevent or suppress collapse of the structure of the battery device due to damage to a curable adhesive when swelling occurs.

In addition, according to an embodiment of the present disclosure, it is possible to prevent deterioration of a heat dissipation function caused by separation of a battery cell from the thermally conductive adhesive due to swelling. Therefore, the cooling performance of the battery device can be consistently maintained.

Therefore, according to these aspects of the present disclosure, the cycle performance of the battery device can be improved. That is, various aspects of the present disclosure can provide a battery device with improved lifespan to be stably used for a long period of time.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which may be a cross-sectional view taken along line I - I' in FIG. 2.
FIG. 4 is a perspective view of an overflow prevention member applied to a battery module according to an embodiment of the present disclosure.
FIG. 5 is a cross-sectional view of a battery module to which an overflow prevention member is applied according to an embodiment of the present disclosure.
FIG. 6 is a drawing illustrating a stopper applied to a battery module according to an embodiment of the present disclosure.
FIG. 7 is a perspective view of an overflow prevention member applied to a battery module according to another embodiment of the present disclosure.
FIG. 8 is a cross-sectional view of a battery module to which an overflow prevention member is applied according to another embodiment of the present disclosure.
FIG. 9 is a perspective view of an overflow prevention member applied to a battery module according to another embodiment of the present disclosure.
FIG. 10 is a perspective view of an overflow prevention member applied to a battery module according to another embodiment of the present disclosure.
FIG. 11 is a cross-sectional view of a battery module to which an overflow prevention member is applied according to another embodiment of the present disclosure.
FIG. 12 is a perspective view of an overflow prevention member applied to a battery module according to another embodiment of the present disclosure.
FIG. 13 is a drawing illustrating a guide portion applied to an overflow prevention pad of a battery module according to another embodiment of the present disclosure.
FIG. 14 is a perspective view schematically illustrating the configuration of a battery pack according to an embodiment of the present disclosure.
FIG. 15 is a perspective view schematically illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, i.e., a stacking direction of battery cells, the Y-axis direction may indicate a front-back direction perpendicular to the X-axis direction on the horizontal plane (X-Y plane), i.e., a longitudinal direction of a battery cell, and the Z-axis direction may indicate an up-down direction (vertical direction) perpendicular to both the X-axis direction and the Y-axis direction, i.e., a height direction of a battery cell.

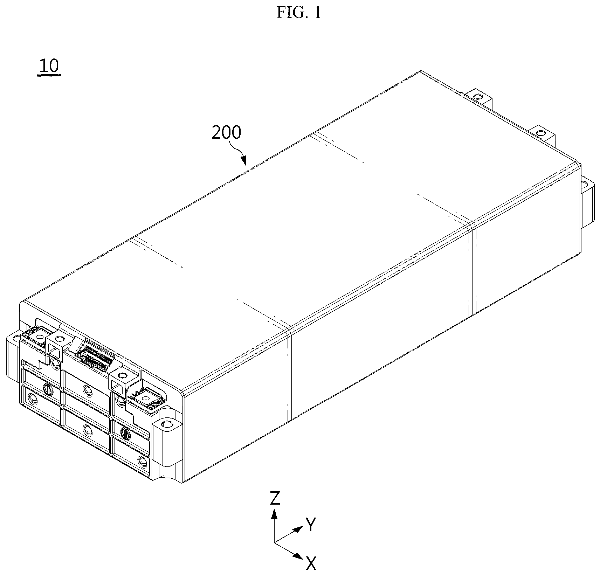

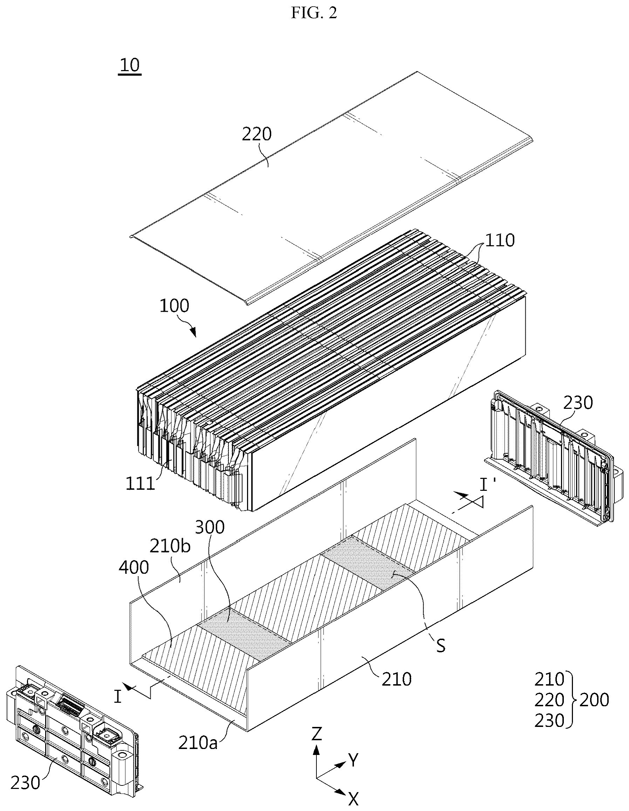

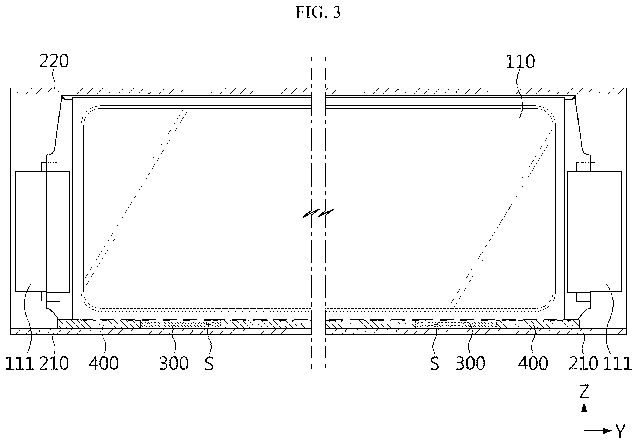

FIG. 1 is a perspective view of a battery module according to an embodiment of the present disclosure, and FIG. 2 is an exploded perspective view of a battery module according to an embodiment of the present disclosure. In addition, FIG. 3 is a cross-sectional view of a battery module according to an embodiment of the present disclosure, which may be a cross-sectional view taken along line I - I' in FIG. 2.

Referring to FIGS. 1 to 3, a battery module 10 according to the present disclosure includes a cell assembly 100, a module case 200, a thermally conductive adhesive 300, and an overflow prevention member 400.

The cell assembly 100 may include one or more battery cells 110, particularly, a plurality of battery cells 110. Here, each battery cell 110 may indicate one secondary battery or a group of secondary batteries. In this specification, the battery cell 110 will be described based on the assumption that it is one secondary battery.

The plurality of battery cells 100 may include an electrode assembly, a cell case that stores the electrode assembly, and an electrode lead 111 that is connected to the electrode assembly and extends outside the cell case to function as an electrode terminal.

In this case, the battery case may be configured in various shapes, and the battery cells 110 may be classified into pouch-type cells, cylindrical cells, and prismatic cells depending on the shape of the battery case. Since the types of battery cells 110 were widely known at the time of filing the present disclosure, a detailed description thereof will be omitted. The present disclosure may be applied to all types of secondary batteries known at the time of filing the present disclosure, and is not limited to a specific type of secondary battery.

In the cell assembly 100, the plurality of battery cells 110 may be configured to be stacked in at least one direction. For example, the plurality of battery cells 110 may be stacked to be arranged in the horizontal direction, particularly in the left-right direction (X-axis direction), as shown in FIG. 2. In addition, the plurality of battery cells 110 provided in the cell assembly 100 may be electrically connected to each other in series and/or in parallel through a bus-bar (not shown) and the like.

Meanwhile, referring to FIG. 2, the module case 200 may be configured to store the cell assembly 100. Specifically, the module case 200 may have a storage space formed therein and store the cell assembly 100 in the storage space.

For example, the module case 200 may be configured to have a case body 210, a top plate 220, and an end plate 230 to confine the storage space. In addition, the cell assembly 100 may be positioned in the confined storage space. The module case 200 may be at least partially configured as metal and/or plastic materials.

At least some of the various plates constituting the module case 200 may be configured in an integrated form. For example, the module case 200 may be configured to have a case body 210 in a U-frame shape in which the lower plate 210a, the left plate, and the right plate 210b are integrated with each other as shown in FIG. 2, and the top plate 220 and the end plate 230 may cover or seal the upper, front, and rear sides of the case body 210.

In this case, various fastening methods such as welding, bonding, bolting, and hooking may be used to couple and fix the top plate 220 and the end plate 230 to the case body 210.

Alternatively, the module case 200 may be manufactured as a mono-frame in which the top plate 220 and the case body 210 are integrated with each other. Alternatively, the plate may be manufactured separately and then coupled to each other through welding or the like to form the module case 200. However, the present disclosure is not limited to a specific material or shape of the module case 200.

The thermally conductive adhesive 300 may be interposed between the cell assembly 100 and the module case 200. For example, referring to FIG. 3, the thermally conductive adhesive 300 may be provided between one side of the cell assembly 100, for example, the bottom of the cell assembly 100, and the bottom surface 210a of the module case 200.

In addition, the thermally conductive adhesive 300 may be configured to fix the cell assembly 100 to the module case 200. To this end, the thermally conductive adhesive 300 may include an adhesive component. For example, as shown in FIG. 3, in the case where the thermally conductive adhesive 300 is positioned at the bottom of the cell assembly 100, the thermally conductive adhesive 300 may bond and fix the bottom of the cell assembly 100 to the bottom surface 210a of the module case 200.

In addition, the thermally conductive adhesive 300 may be configured to transfer heat between the cell assembly 100 and the module case 200. The battery cell 110 may generate heat during use, and if this heat is not properly discharged, the performance of the battery cell 110 cannot be stably ensured, it may lead to thermal runaway, ignition, and explosion of the battery cell in worst cases. In this respect, the heat generated in the battery cell 110 needs to be properly discharged to the outside through the module case 200. In this case, the thermally conductive adhesive 300 may ensure good heat transfer between the battery cell 110 and the module case 200, thereby securing stable cooling performance for the battery module 10.

The thermally conductive adhesive 300 may have a material capable of transferring heat. In particular, the thermally conductive adhesive 300 may be made of a resin material, and in this case, the thermally conductive adhesive 300 may be referred to as a thermal resin. The thermally conductive adhesive 300 may include various materials, such as urethane, silicone, and epoxy. The thermally conductive adhesive 300 may be expressed as other terms such as TIMs (Thermal Interface Materials), potting resin, or the like, and various thermally conductive adhesives or TIMs known at the time of filing the present disclosure may be used as the materials of the thermally conductive adhesive 300 of the battery module 10 according to the present disclosure.

The thermally conductive adhesive 300 may be interposed between all battery cells 110 provided in the cell assembly 100 and the module case 200. That is, the thermally conductive adhesive 300 may be configured to come into direct contact with all battery cells 110 included in the cell assembly 100. According to this implemented configuration of the present disclosure, heat dissipation for all battery cells 110 included in the battery module 10 may be performed through the thermally conductive adhesive 300. Therefore, the overall cooling performance of the battery module 10 may be further improved.

The thermally conductive adhesive 300 may be applied to the bottom surface 210a of the module case 200 and cured before the cell assembly 100 is stored in the module case 200. If the cell assembly 100 is placed on the thermally conductive adhesive 300 that is not completely cured, the thermally conductive adhesive 300 may overflow to the side of the cell assembly 100, for example, to the part where the electrode lead 111 is provided. If the thermally conductive adhesive 300 is cured in such a state that it overflows to the side of the cell assembly 100, one side of the cell assembly 100 in contact with the overflowing thermally conductive adhesive 300 may be fixed. As a result, if a swelling phenomenon occurs in the battery cell 110, the battery cell 110 may be damaged or broken.

To prevent such a problem, the battery module 10 according to an embodiment of the present disclosure may include an overflow prevention member 400. The overflow prevention member 400 may be provided between the cell assembly 100 and the module case 200. For example, as illustrated in FIG. 3, the overflow prevention member 400 may be provided between the cell assembly 100 and the bottom surface 210a of the module case 200. The overflow prevention member 400 may be configured to form a receiving space S for receiving the thermally conductive adhesive 300.

That is, since the overflow prevention member 400 is configured to have a predetermined thickness, the receiving space S may be formed inside, thereby preventing the injected thermally conductive adhesive 300 from overflowing.

More specifically, the overflow prevention member 400 may be configured to store the thermally conductive adhesive 300 inside the receiving space S to suppress the thermally conductive adhesive 300 from flowing. By providing a space where the thermally conductive adhesive 300 is received on the side where the thermally conductive adhesive 300 is provided, the thermally conductive adhesive 300 may be suppressed from flowing to the outside of the cell assembly 100 along the interface of the battery cell 110.

In particular, as in the embodiment illustrated in FIG. 3, the battery cells 110 may be provided as pouch-type battery cells configured to be stacked with surfaces in contact with each other while the side not having the electrode lead 111 extending therefrom faces downward, and the overflow prevention member 400 may be configured to prevent the thermally conductive adhesive 300 from overflowing to a part, other than the side of the battery cell 110, along the interface extending from the side of the battery cell 110. That is, the thermally conductive adhesive 300 may be configured to be provided only at the bottom of the cell assembly 100 so as to fix the lower part of the cell assembly 100.

According to the above-implemented configuration of the present disclosure, since the overflow prevention member 400 is provided between the cell assembly 100 and the module case 200, the thermally conductive adhesive 300 may be stored in the receiving space S and prevented from overflowing to the side of the cell assembly 100, particularly, to the side where the electrode lead 111 extends therefrom. Therefore, the battery cell 110 may be prevented from being damaged when swelling occurs. Therefore, the battery module 10 according to the present disclosure may secure stability or safety against swelling.

In addition, the overflow prevention member 400 may be configured to transfer heat between the cell assembly 100 and the module case 200. The overflow prevention member 400 may be provided with a material capable of transferring heat. According to the above-implemented configuration of the present disclosure, the overflow prevention member 400 may not only prevent the thermally conductive adhesive 300 from overflowing, but also ensure good heat transfer between the battery cell 110 and the module case 200 together with the thermally conductive adhesive 300 stored in the receiving space S, thereby stably securing cooling performance for the battery module 10.

In addition, the overflow prevention member 400 may be configured to be electrically insulated. In addition, the overflow prevention member 400 may be made of a material that has flame-retardant performance. For example, the overflow prevention member 400 may be made of a material that satisfies flame retardant grade UL-94 VO.

Meanwhile, a plurality of receiving spaces S may be provided. The plurality of receiving spaces S may be arranged on the module case 200 along the horizontal direction. For example, the plurality of receiving spaces S may be disposed to be spaced apart from each other on the bottom surface 210a of the module case 200. According to the above-implemented configuration of the present disclosure, the thermally conductive adhesive 300 may be received even if the thermally conductive adhesive 300 overflows at any position.

In addition, the plurality of receiving spaces S may be disposed on the same plane. All of the receiving spaces S may be configured to have the same height. According to the above-implemented configuration of the present disclosure, in the case where the cell assembly 100 is placed on the overflow prevention member 400, the contact area between the cell assembly 100 and the thermally conductive adhesive 300 may be increased by gravity, so that the cell assembly 100 may be brought into uniform contact with the thermally conductive adhesive 300 received inside the receiving space S. Accordingly, the fixing force between the cell assembly 100 and the bottom surface 210a of the module case 200 or the cooling performance of the cell assembly 100 may be secured.

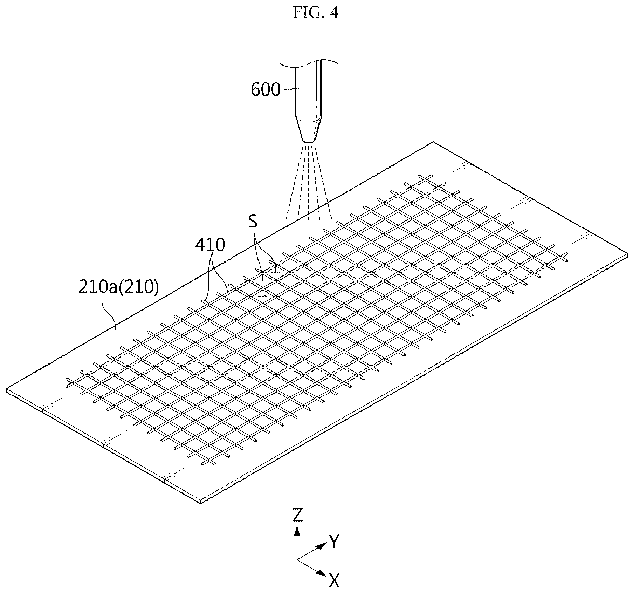

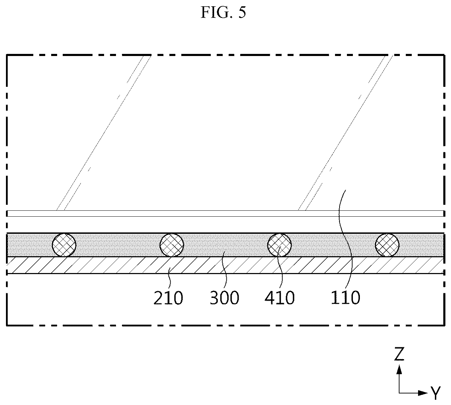

FIG. 4 is a perspective view of an overflow prevention member applied to a battery module according to an embodiment of the present disclosure, and FIG. 5 is a cross-sectional view of a battery module to which an overflow prevention member is applied according to an embodiment of the present disclosure.

As an example, referring to FIGS. 4 and 5, the overflow prevention member 400 may include a mesh pad 410 configured in the form of a mesh. The mesh pad 410 may be configured to have holes that are densely formed like a mesh net. Accordingly, a plurality of receiving spaces S may be provided in the mesh pad 410. Specifically, the thermally conductive adhesive 300 may be applied onto the mesh pad 410 through a dispenser 600, and the thermally conductive adhesive 300 may be received in the receiving spaces S by its own weight.

According to the above-implemented configuration of the present disclosure, since the receiving spaces S capable of receiving the thermally conductive adhesive 300 may be formed densely in the mesh pad 410, the thermally conductive adhesive 300 may be minimized from overflowing to a part, other than the side of the battery cell 110 facing the module case 200, along the interface of the battery cell 110.

In addition, according to the above-implemented configuration of the present disclosure, since the mesh pad 410 has a plurality of small and dense receiving spaces S formed therein, the thermally conductive adhesive 300 may be suppressed from flowing while being guided to be applied approximately flat.

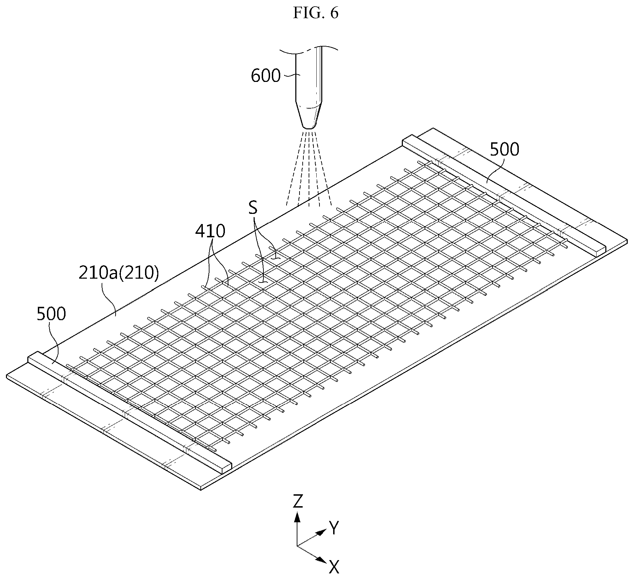

FIG. 6 is a drawing illustrating a stopper applied to a battery module according to an embodiment of the present disclosure.

Referring to FIG. 6, a battery module 10 according to an embodiment of the present disclosure may further include a stopper 500. The stopper 500 may be configured to prevent the thermally conductive adhesive 300 from overflowing to the outside. That is, the stopper 500 may be configured to prevent the thermally conductive adhesive 300 in the receiving space S from overflowing the overflow prevention member 400. The stopper 500 may be provided on both sides of the overflow prevention member 400. In particular, as in the embodiment illustrated in FIG. 6, the stopper 500 may be provided on both sides of the mesh pad 410.

Any material capable of blocking the thermally conductive adhesive 300 from the outside may be used for the stopper 500 without limitation. As an example, the stopper 500 may include a resin material, but is not limited thereto.

According to the above-implemented configuration of the present disclosure, the stopper 500 may guide the thermally conductive adhesive 300 to an area where the thermally conductive adhesive 300 is to be provided together with the overflow prevention member 400, thereby also preventing the thermally conductive adhesive 300 from being injected into an unnecessary area.

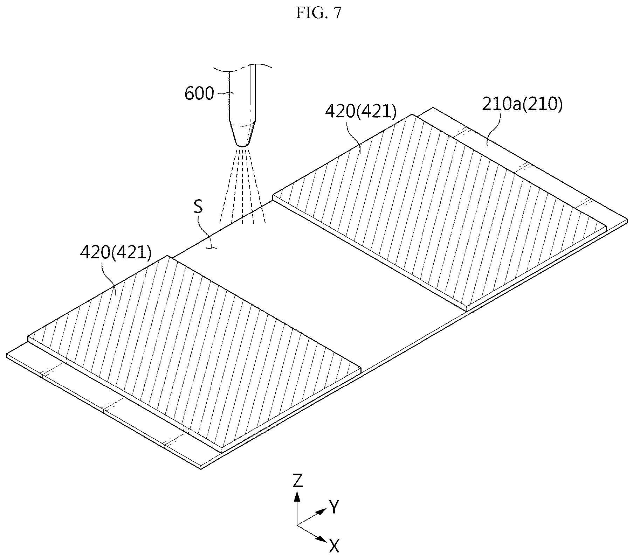

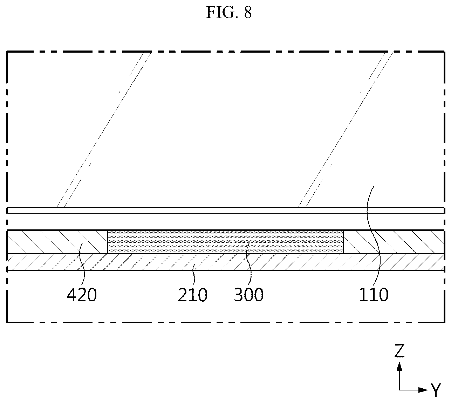

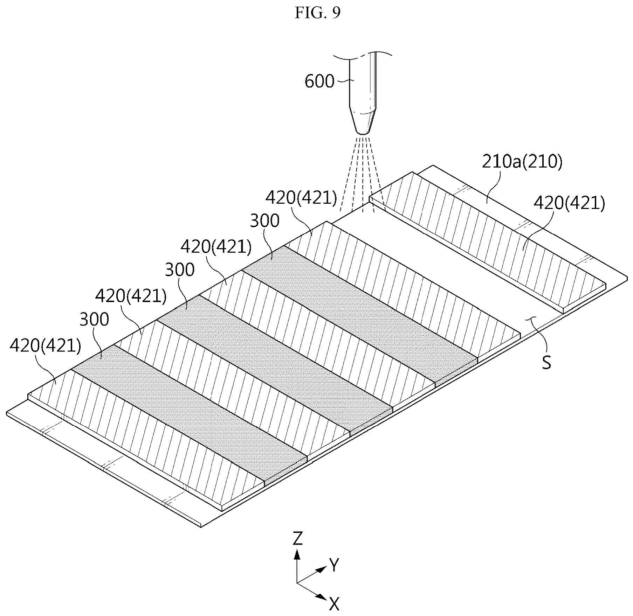

FIG. 7 is a perspective view of an overflow prevention member applied to a battery module according to another embodiment of the present disclosure, and FIG. 8 is a cross-sectional view of a battery module to which an overflow prevention member is applied according to another embodiment of the present disclosure. In addition, FIG. 9 is a perspective view of an overflow prevention member applied to a battery module according to another embodiment of the present disclosure.

As an example, the overflow prevention member 400 may include a plurality of overflow prevention pads 420. The plurality of overflow prevention pads 420 may be provided to be spaced apart from each other. The receiving spaces S may be defined as spaces formed by the plurality of overflow prevention pads 420 being spaced apart. Accordingly, the thermally conductive adhesive 300 may be applied to the receiving spaces S between the overflow prevention pads 420 through the dispenser 600.

The overflow prevention pad 420 may be configured to transfer heat between the cell assembly 100 and the module case 200. The overflow prevention pad 420 may be made of a material capable of transferring heat. As a more specific example, the overflow prevention pad 420 may be configured as a thermally conductive pad. The thermally conductive pad is a heat dissipation pad that controls heat generated from the battery cell 110, and may transfer heat generated from the battery cell 110 to the outside. The overflow prevention pad 420 may be made of a material such as acrylic or silicone.

According to the above-implemented configuration of the present disclosure, the overflow prevention pad 420 may ensure good heat transfer between the battery cell 110 and the module case 200, thereby securing stable cooling performance for the battery module 10.

In addition, the overflow prevention pad 420 may be made of a material having adhesiveness. Accordingly, the overflow prevention pad 420 may be configured to adhere to the battery cells 110 included in the cell assembly 100.

According to the above-implemented configuration of the present disclosure, the adhesion between the cell assembly 100 and the overflow prevention pad 420 may be secured, thereby preventing the overall structure of the cell assembly 100 from being greatly disturbed even by shocks such as vibrations. Therefore, the structural rigidity and structural stability of the entire cell assembly 100 may be secured.

In addition, according to the above-implemented configuration of the present disclosure, when the cell assembly 100 is placed on the overflow prevention pad 420, it may help to fix the cell assembly 100 to the overflow prevention pad 420, which may lead to improved thermal transfer performance through the overflow prevention pad 420.

Meanwhile, the thickness of the thermally conductive adhesive 300 filled in the receiving spaces S may be configured to correspond to the thickness of the overflow prevention pad 420. Therefore, the thermally conductive adhesive 300 and the overflow prevention pad 420 may be configured to form an approximately flat plane.

In this case, the cell assembly 100 may be configured to be in uniform contact with not only the overflow prevention pad 420 but also the thermally conductive adhesive 300. In the above-implemented configuration of the present disclosure, the contact area between all of the battery cells 110 included in the cell assembly 100 and the heat transfer material may be maximized. That is, all the battery cells 110 included in the cell assembly 100 may be in contact with the heat transfer material, so that the cooling performance of the battery cells 110 may be further improved.

As a more specific example, referring to FIGS. 7 to 9, the overflow prevention pad 420 may include a first pad 421. A plurality of first pads 421 may be provided. The plurality of first pads 421 may be configured to be spaced apart from each other along a first direction. Here, the first direction may be defined as the longitudinal direction of the battery cell 110 (the Y-axis direction in the drawing).

The first pad 421 may be configured in a plate shape. In this case, the plurality of first pads 421 may be configured as plates and disposed parallel to each other along the first direction. For example, referring to the configuration illustrated in FIG. 7, two first pads 421 may be configured as lying plates and disposed parallel to each other in the first direction. In this case, an receiving space S may be provided between the two first pads 421, and the thermally conductive adhesive 300 may be applied to the receiving space S by a dispenser 600.

Alternatively, the first pad 421 may be configured in the shape of a rod extending in a second direction orthogonal to the first direction. The second direction may be defined as the stacking direction of the battery cells 110 (the X-axis direction in the drawing). For example, referring to the configuration illustrated in FIG. 9, five first pads 421 extending in the second direction may be disposed parallel to each other along the first direction. In this case, four receiving spaces S may be provided between the five first pads 421, so that the thermally conductive adhesive 300 may be applied to the receiving spaces S by the dispenser 600.

The width (length in the first direction) of the first pad 421 may be designed in consideration of the volume of the receiving space S for preventing the thermally conductive adhesive 300 from overflowing. In addition, the length (in the second direction) of the first pad 421 may be configured to correspond to the length of the bottom surface 210a of the module case 200 in the left-right direction.

Meanwhile, the first pad 421 may be configured to face longitudinal both ends of the cell assembly 100. For example, a plurality of first pads 421 may be provided at the bottom of the cell assembly 100, and a first pad 421 located at the outermost side, among the plurality of first pads 421, may face longitudinal both ends of the cell assembly 100.

According to the above-implemented configuration of the present disclosure, since the first pads 421 are provided at both ends of the cell assembly 100, the thermally conductive adhesive 300 may be further suppressed from overflowing to the side of the cell assembly 100 where the electrode lead 111 is provided. Accordingly, the cell case of the battery cell 110 may be prevented from being damaged at the side of the cell assembly 100.

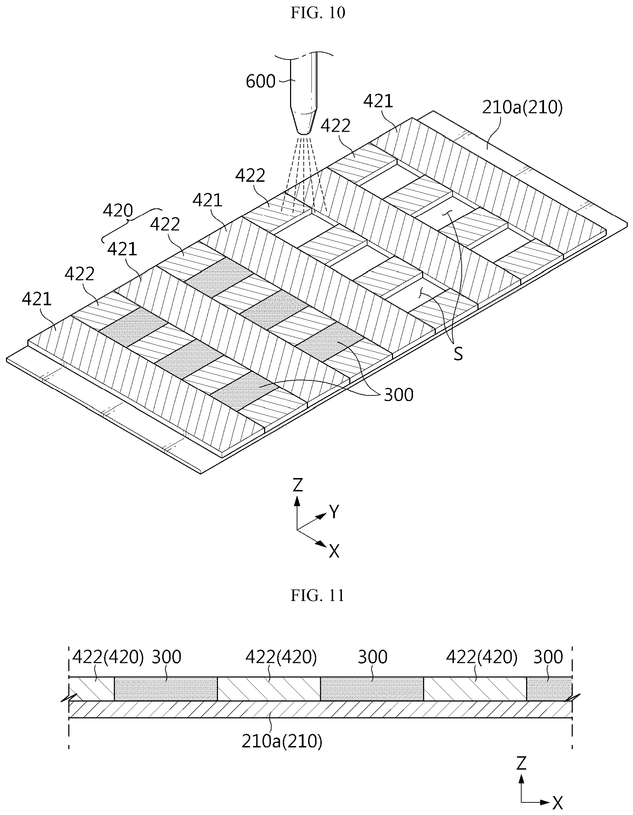

FIG. 10 is a perspective view of an overflow prevention member applied to a battery module according to another embodiment of the present disclosure, and FIG. 11 is a cross-sectional view of a battery module to which an overflow prevention member is applied according to another embodiment of the present disclosure.

Referring to FIGS. 10 and 11, the overflow prevention pad 420 may be configured in a grid shape. As a more specific example, the overflow prevention pad 420 may include a second pad 422. The second pad 422 may be provided between the first pads 421. That is, the second pad 422 may be provided between the first pads 421 that are spaced apart from each other. The width (length in the first direction) of the second pad 422 may be configured to correspond to the distance by which the first pads 421 are spaced apart from each other. The second pad 422 may be configured such that both sides in the first direction come into contact with the first pad 421.

In addition, a plurality of second pads 422 may be provided. The plurality of second pads 422 may be configured to be spaced apart from each other along the second direction. An receiving space S may be formed between the adjacent second pads 422. As a result, the second pad 422 and the receiving space S may be alternately disposed between the first pads 421.

For example, referring to the configuration illustrated in FIG. 10, four second pads 422 disposed along the second direction may be provided between adjacent first pads 421. In this case, three receiving spaces S may be provided between the four second pads 422, and the thermally conductive adhesive 300 may be applied to the receiving space S by the dispenser 600.

According to the above-implemented configuration of the present disclosure, the receiving space S may be divided into multiple spaces by the grid-shaped overflow prevention pad 420, thereby more reliably suppressing the thermally conductive adhesive 300 from flowing. Accordingly, it is possible to prevent the thermally conductive adhesive 300 from overflowing to a part, other than the side of the battery cell 110, along the interface extending from the side of the battery cell 110.

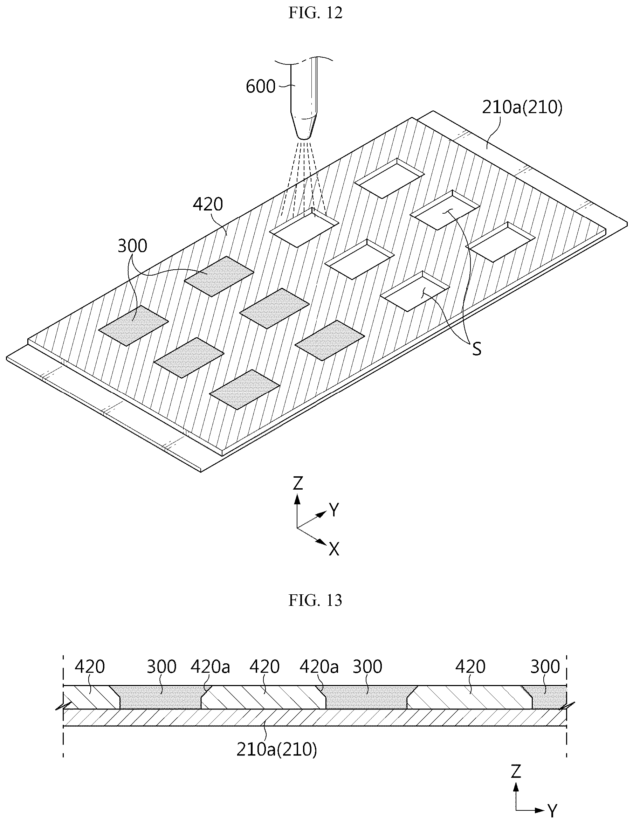

FIG. 12 is a perspective view of an overflow prevention member applied to a battery module according to another embodiment of the present disclosure.

Referring to FIG. 12, the first pad 421 and the second pad 422 may be configured in an integrated form. More specifically, the overflow prevention pad 420 may be configured by at least partially perforating the same. In this case, the receiving space S may be defined by the perforated portion of the overflow prevention pad 420.

According to the above-implemented configuration of the present disclosure, the receiving space S may be formed by perforating the overflow prevention pad 420 without separately manufacturing the first pad 421 and the second pad 422, thereby reducing cost and time. Accordingly, productivity may be improved in manufacturing the battery module 10.

FIG. 13 is a drawing illustrating a guide portion applied to an overflow prevention pad of a battery module according to another embodiment of the present disclosure.

Meanwhile, the overflow prevention pad 420 may be provided with a guide portion 420a. The guide portion 420a may be configured to guide the thermally conductive adhesive 300 toward the receiving space S. Specifically, the guide portion 420a may be configured to be inclined toward the receiving space S. The guide portion 420a may be provided on at least one side of the overflow prevention pad 420. For example, as in the embodiment illustrated in FIG. 13, a plurality of overflow prevention pads 420 may be disposed in the first direction (the Y-axis direction in FIG. 13), and the guide portions 420a may be provided on the sides of the plurality of overflow prevention pads 420 facing each other.

According to the above-implemented configuration of the present disclosure, when the thermally conductive adhesive 300 is applied, the thermally conductive adhesive 300 may be guided to the receiving spaces S along the guide portions 420a and stored therein. Therefore, the thermally conductive adhesive 300 may be more effectively prevented from leaking out of the receiving spaces S or the overflow prevention pad 420.

Meanwhile, although the various drawings of this specification illustrate the thermally conductive adhesive 300 and the overflow prevention member 400 provided at the bottom of the battery module 10, the thermally conductive adhesive 300 and the overflow prevention member 400 may be located on other portions, such as the top of the battery module 10. In addition, the thermally conductive adhesive 300 and the overflow prevention member 400 may be located on two or more sides of the battery module 10. For example, the thermally conductive adhesive 300 and the overflow prevention member 400 may be applied to the upper side and the lower side of the cell assembly 100, respectively.

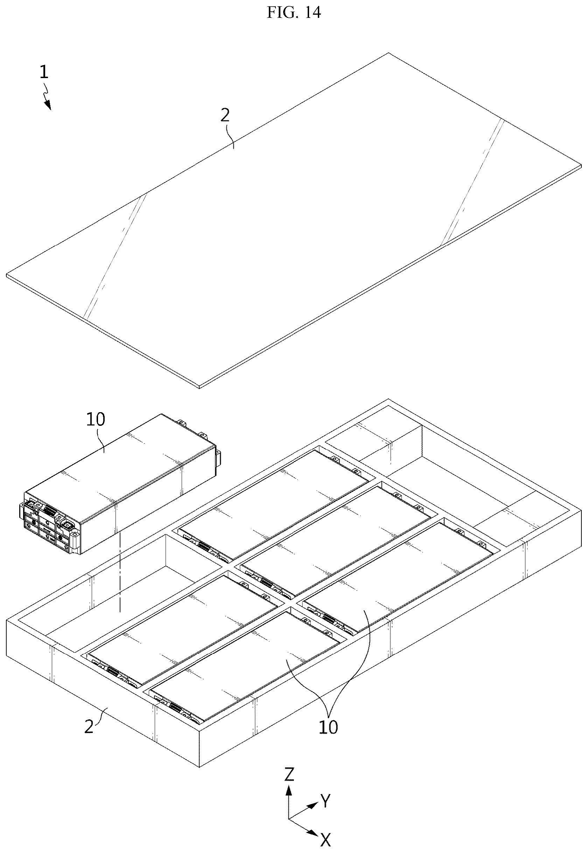

FIG. 14 is a perspective view schematically illustrating the configuration of a battery pack according to an embodiment of the present disclosure.

Referring to FIG. 14, a battery pack 1 according to an embodiment of the present disclosure may include one or more battery modules 10 according to an embodiment of the present disclosure described above. The battery pack 1 according to the present disclosure may further include a pack case 2 for storing the components described above together with a BMS (Battery Management System) for integrated control of charging and discharging of one or more battery modules, a current sensor, a fuse, and the like.

Alternatively, the battery pack 1 according to the present disclosure may include a battery module 10 according to the present disclosure, and may be configured such that the module case 200 of the battery module 10 functions as the pack case 2 while excluding the pack case 2. In this case, components of the battery pack, such as a BMS, a bus-bar, or a relay, may be included inside the module case 200. Such a type of battery pack is also called a cell-to-pack (CTP) type in which the battery cell 110 is directly stored in the pack case 2. Recently, the development of such a CTP-type battery pack has also been active, and the present disclosure may also be applied to such a CTP-type battery pack.

In particular, the overflow prevention member 400 may be provided on the inner surface, i.e., the bottom surface, of the housing, which is the pack case 2 and the module case 200, so that the thermally conductive adhesive 300 may be prevented from overflowing.

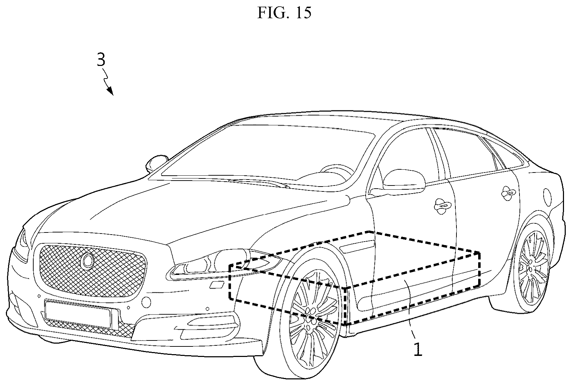

FIG. 15 is a perspective view schematically illustrating a vehicle according to an embodiment of the present disclosure.

Referring to FIG. 15, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 may be operated by power supplied from the battery pack 1 or the battery module 10 according to an embodiment of the present disclosure.

As described above, although the present disclosure has been described with reference to limited embodiments and drawings, the present disclosure is not limited thereto, and various modifications and variations are possible inside the technical idea of the present disclosure and the scope of equivalence of the claims to be described below by those skilled in the art to which the present disclosure pertains.

## Claims

1. A battery module comprising:
a cell assembly comprising a plurality of battery cells;
a module case configured to store the cell assembly;
a thermally conductive adhesive interposed between the cell assembly and the module case and configured to fix the cell assembly; and
an overflow prevention member provided between the cell assembly and the module case and configured to form a space in which the thermally conductive adhesive is to be received.

2. The battery module according to claim 1,
wherein the overflow prevention member is configured to receive the thermally conductive adhesive inside the receiving space and suppress the thermally conductive adhesive from flowing.

3. The battery module according to claim 1,
wherein the battery cells are provided as pouch-type battery cells configured to be stacked with surfaces in contact with each other while a side not having an electrode lead extending therefrom faces downward, and
wherein the overflow prevention member is configured to prevent the thermally conductive adhesive from overflowing to a part, other than the side of the battery cell, along an interface extending from the side of the battery cell.

4. The battery module according to claim 1,
wherein the thermally conductive adhesive is provided only at a bottom of the cell assembly to fix a lower part of the cell assembly.

5. The battery module according to claim 1,
wherein a plurality of receiving spaces are provided to be disposed on the module case along a horizontal direction.

6. The battery module according to claim 1,
wherein the overflow prevention member comprises
a mesh pad configured in a mesh shape.

7. The battery module according to claim 1,
further comprising a stopper provided on both sides of the overflow prevention member.

8. The battery module according to claim 1,
wherein the overflow prevention member comprises
a plurality of overflow prevention pads configured such that the receiving space is formed in spaces formed to be spaced apart from each other.

9. The battery module according to claim 8,
wherein the overflow prevention pad is configured as a thermally conductive pad.

10. The battery module according to claim 8,
wherein the overflow prevention pad is made of a material having adhesiveness.

11. The battery module according to claim 8,
wherein the overflow prevention pad comprises
first pads configured to be spaced apart from each other along a first direction.

12. The battery module according to claim 11,
wherein the first pad is configured to face longitudinal both ends of the cell assembly.

13. The battery module according to claim 12,
wherein the overflow prevention pad comprises
second pads provided between the first pads and configured to be spaced apart from each other along a second direction orthogonal to the first direction.

14. The battery module according to claim 8,
wherein the overflow prevention pad is configured by at least partially perforating the same, and
wherein the receiving space is defined by the perforated portion of the overflow prevention pad.

15. The battery module according to claim 8,
wherein the overflow prevention pad comprises
a guide portion configured to be inclined toward the receiving space.

16. A battery pack comprising a battery module according to any one of claims 1 to 15.

17. A vehicle comprising a battery module according to any one of claims 1 to 15.
